# EUROPEAN PATENT APPLICATION

(11) **EP 4 494 457 A1**
(43) Date of publication of application: **22.01.2025**
(21) Application number: 23791891.7
(22) Date of filing: 19.04.2023
(51) Int. Cl.: A01G 23/08, G06T 7/60, G06V 20/17

(54) **FORESTRY MANAGEMENT SYSTEM AND FORESTRY MANAGEMENT METHOD**

(30) Priority: 19.04.2022 JP 2022069071
(71) Applicant: Komatsu Ltd., Minato-ku Tokyo 107-8414 (JP)
(72) Inventor: TOGASHI, Ryoichi, Tokyo 107-8414 (JP); UENO, Mitsuru, Tokyo 107-8414 (JP)
(74) Representative: Global IP Europe Patentanwaltskanzlei
(86) International application number: PCT/JP2023/015602
(87) International publication number: WO 2023/204243

(57) **Abstract**

Low-altitude observation equipment includes a distance measurement device that generates a distance map and a position measurement device that measures a position of the low-altitude observation equipment. The low-altitude observation equipment moves in a region of a forest near a ground surface where there are no branches. A data acquisition unit acquires a low-altitude distance map generated by the distance measurement device and the position of the low-altitude observation equipment from the low-altitude observation equipment. A position specifying unit specifies a position of a tree, based on a distance from the low-altitude observation equipment to the tree specified based on the low-altitude distance map, and on the position of the low-altitude observation equipment. An identification unit acquires identification information for identifying an individual of the tree based on the position of the tree. A recording unit records low-altitude tree information, which is tree information of a portion of the individual lower than branches that is measured based on the low-altitude distance map, in a database in association with the identification information.

## Description

### [Technical Field]

The present disclosure relates to a forestry management system and a forestry management method.

Priority is claimed on Japanese Patent Application No. 2022-069071, filed April 19, 2022, the content of which is incorporated herein by reference.

### [Background Art]

Patent Document 1 discloses a technology for recognizing a terrain of a work site based on images of the work site acquired by being captured by an unmanned aircraft and for planning a moving route of forestry machine for timber harvesting.

### [Citation List]

### [Patent Document]

[Patent Document 1]
United States Patent No. 10322803

### [Summary of Invention]

### [Technical Problem]

In a case in which trees are densely grown in a forest, a canopy may be shown in an image captured from a sky, and states of trees below the canopy may not be shown. Additionally, there is a possibility that trees not forming the canopy are not shown in the image captured from the sky, making it impossible to manage conditions of these trees.

An object of the present disclosure is to provide a forestry management system and a forestry management method which can manage conditions of trees forming a forest.

### [Solution to Problem]

An aspect of the present invention relates to a forestry management system including: a data acquisition unit configured to acquire a low-altitude distance map generated by a distance measurement device that generates a distance map and a position of low-altitude observation equipment from the low-altitude observation equipment, the low-altitude observation equipment moving in a region of a forest near a ground surface where there are no branches and including the distance measurement device and a position measurement device that measures the position of the low-altitude observation equipment; a position specifying unit configured to specify a position of a tree, based on a distance from the low-altitude observation equipment to the tree specified based on the low-altitude distance map, and on the position of the low-altitude observation equipment; an identification unit configured to acquire identification information for identifying an individual of the tree based on the position of the tree; and a recording unit configured to record low-altitude tree information, which is tree information of a portion of the individual lower than branches that is measured based on the low-altitude distance map, in a database in association with the identification information.

### [Advantageous Effects of Invention]

According to the above aspect, a forestry management system can manage conditions of trees forming a forest.

### [Brief Description of Drawings]

FIG. 1 is a schematic diagram showing a forestry management system according to a first embodiment.
FIG. 2 is a configuration diagram showing an appearance of low-altitude observation equipment according to the first embodiment.
FIG. 3 is a configuration diagram showing an appearance of high-altitude observation equipment according to the first embodiment.
FIG. 4 is a configuration diagram showing an appearance of a forestry machine according to the first embodiment.
FIG. 5 is a schematic block diagram showing a configuration of a forestry management device according to the first embodiment.
FIG. 6 is a diagram showing a database stored in a storage according to the first embodiment.
FIG. 7 is a flowchart showing an update process of tree information performed by the forestry management device according to the first embodiment.
FIG. 8 is a flowchart showing a generation process of a felling plan performed by the forestry management device according to the first embodiment.
FIG. 9 is a schematic block diagram showing a configuration of a forestry management device according to a second embodiment.

### [Description of Embodiments]

### <First Embodiment>

### «Configuration of Forestry Management System»

Hereinafter, embodiments will be described in detail with reference to the drawings.

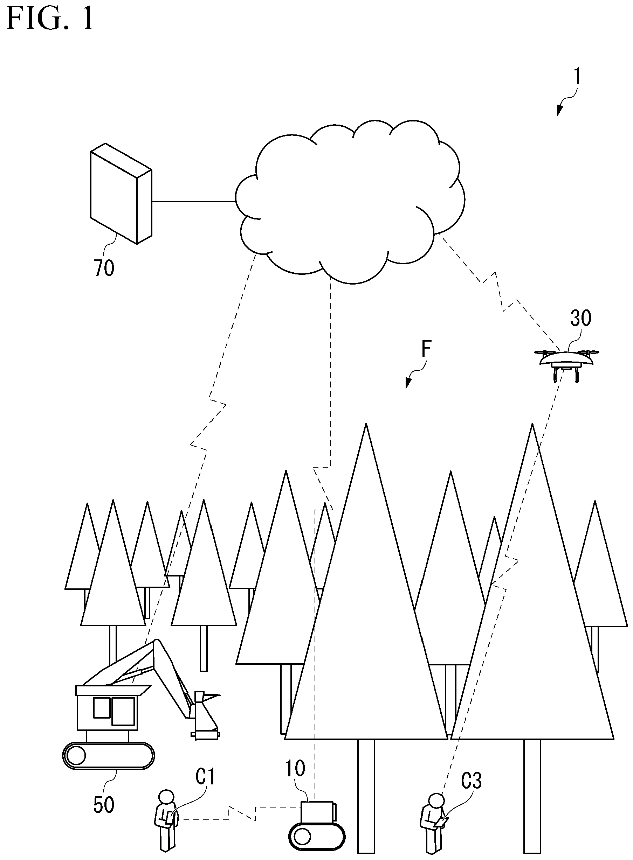

FIG. 1 is a schematic diagram showing a forestry management system 1 according to a first embodiment.

The forestry management system 1 identifies individuals of trees growing in a forest F and manages a condition of each individual. Additionally, the forestry management system 1 generates a harvest plan based on the conditions of the trees, and carries out harvesting of the trees. The forestry management system 1 includes low-altitude observation equipment 10, high-altitude observation equipment 30, a forestry machine 50, and a forestry management device 70.

The low-altitude observation equipment 10 travels on the ground of the forest F via remote operation and observes the trunks of trees growing in the forest F and the ground surface. As shown in FIG. 1, the low-altitude observation equipment 10 according to the first embodiment may be a robot with a continuous track. The low-altitude observation equipment 10 according to another embodiment may travel via wheels or legs, or may be a drone that flies in the air. When the low-altitude observation equipment 10 flies, the low-altitude observation equipment 10 flies at an altitude lower than the canopy of the forest F. The canopy refers to the part of the forest where branches are dense. That is, the low-altitude observation equipment 10 flies in a region of the forest F near the ground surface where there are no branches.

The high-altitude observation equipment 30 flies in the sky of the forest F via remote operation and observes the crowns of trees growing in the forest F. The crown refers to the portion where the branches of the tree are dense. The remote operation may involve the operation via the operator with a controller C3 in real time, or may involve flying along a route set in advance by the operator using the controller C3. That is, the high-altitude observation equipment 30 flies at an altitude higher than the canopy of the forest F. As shown in FIG. 1, the high-altitude observation equipment 30 according to the first embodiment may be a drone.

The forestry machine 50 is a work machine that grips a trunk of the tree and then fells the tree and that can travel while gripping the trunk. As a result, the forestry machine 50 can collect the timber at a predetermined location. The forestry machine 50 may be a feller buncher or a harvester.

The forestry management device 70 receives measurement data from the low-altitude observation equipment 10 and from the high-altitude observation equipment 30, identifies individuals of trees inhabiting the forest F, and records the condition of each individual. In addition, the forestry management device 70 generates a harvest plan based on the conditions of the trees and transmits an instruction signal to the forestry machine 50. The forestry machine 50 operates based on the instruction signal received from the forestry management device 70. The low-altitude observation equipment 10, the high-altitude observation equipment 30, the forestry machine 50, and the forestry management device 70 are connected to each other via a communication network N such as the Internet. The forestry management device 70 may be provided remotely from the low-altitude observation equipment 10, the high-altitude observation equipment 30, and the forestry machine 50.

### «Configuration of Low-Altitude Observation Equipment 10»

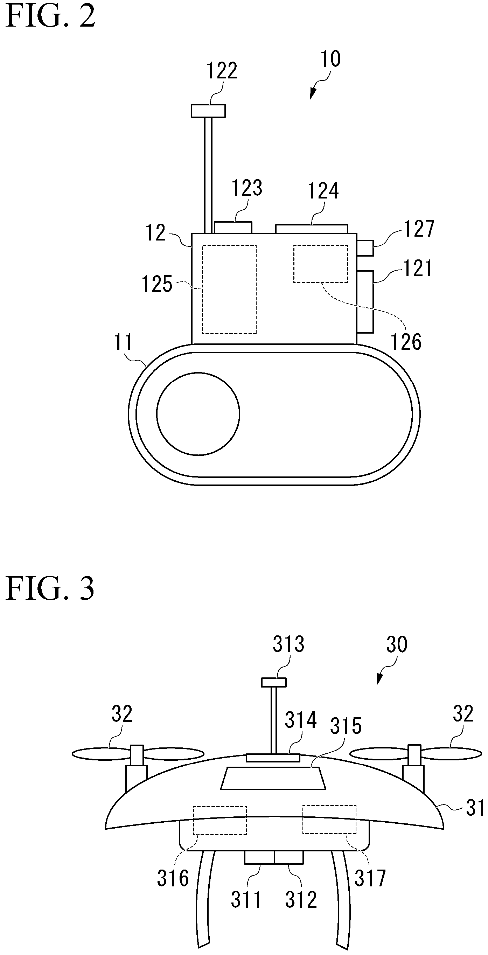

FIG. 2 is a configuration diagram showing an appearance of the low-altitude observation equipment 10 according to the first embodiment.

The low-altitude observation equipment 10 includes an undercarriage 11 and a fuselage 12. The undercarriage 11 supports the fuselage 12 to be capable of traveling. The undercarriage 11 of the low-altitude observation equipment 10 may be, for example, a continuous track driven by a power of a motor.

The fuselage 12 includes a distance measurement device 121, a position measurement device 122, a posture measurement device 123, an illuminance sensor 124, a battery 125, a control device 126, and an imaging device 127.

The distance measurement device 121 generates a distance map that maps the distance to the subject within the field of view. Examples of the distance measurement device 121 include a stereo camera, a ToF camera, a pattern projection camera, and LiDAR. The imaging device 127 captures a color image of the subject. The distance measurement device 121 and the imaging device 127 are provided so that lines of sight thereof face the front of the fuselage 12. When the distance measurement device 121 can obtain a color image, for example, when the distance measurement device 121 is a stereo camera, the fuselage 12 need not include the imaging device 127. The distance map is data that maps the distances between a plurality of points on a two-dimensional plane. The distance map includes, for example, three-dimensional shape data generated by LiDAR or the like and a distance image generated by a stereo camera.

The position measurement device 122 includes an antenna that receives a position measurement signal from a GNSS, and measures the position of the low-altitude observation equipment 10 based on the position measurement signal received via the antenna. The position measurement device 122 outputs position data indicating the measured position to the control device 126. The position of the low-altitude observation equipment 10 is represented by a three-dimensional global coordinate system. In a case in which the position measurement device 122 includes a plurality of antennas, the position measurement device 122 can measure the azimuth direction in which the low-altitude observation equipment 10 faces.

The posture measurement device 123 measures a posture of the fuselage 12. Specifically, the posture measurement device 123 measures the pitch angle, roll angle, and yaw angle of the fuselage 12 based on the acceleration and angular acceleration measured by the inertial measurement unit (IMU) built in the posture measurement device 123. In a case in which the IMU includes a geomagnetic sensor, the posture measurement device 123 can measure the posture in the global coordinate system. Meanwhile, the posture measurement device 123 may measure the posture in the local coordinate system based on the fuselage 12, and convert this posture into the global coordinate system based on the azimuth direction in which the fuselage 12 faces, which is measured by the position measurement device 122.

The illuminance sensor 124 is provided on the upper surface of the fuselage 12 and measures the brightness around the low-altitude observation equipment 10.

The battery 125 is the power source for the undercarriage 11 and the control device 126.

The control device 126 receives the control signal for the undercarriage 11 from a controller C1, which remotely operates the low-altitude observation equipment 10, and drives the undercarriage 11 in response to the control signal. The controller C1 may be a PC or a smartphone. The control device 126 transmits the image of the distance map generated by the distance measurement device 121 or the image captured by the imaging device 127 to the controller C1. Additionally, the control device 126 receives a measurement instruction signal that issues the instruction for measurement of the condition of the tree from the controller C1. For example, the operator operates the controller C1 to orient the front of the low-altitude observation equipment 10 towards the tree to be measured and transmits the measurement instruction signal. That is, the operator controls the posture of the low-altitude observation equipment 10 so that the tree is shown in the center of the image, and transmits the measurement instruction signal.

The control device 126 transmits the measurement data acquired by the distance measurement device 121, the position measurement device 122, the posture measurement device 123, and the illuminance sensor 124 to the forestry management device 70 in association with the measured time after receiving the measurement instruction signal.

### «Configuration of High-Altitude Observation Equipment 30»

FIG. 3 is a configuration diagram showing an appearance of the high-altitude observation equipment 30 according to the first embodiment.

The high-altitude observation equipment 30 includes a fuselage 31 and a propeller 32. The propeller 32 is provided on an upper portion of the fuselage 31 and generates a lift through rotation. The fuselage 31 is provided with a distance measurement device 311, a multispectral camera 312, a position measurement device 313, a posture measurement device 314, an illuminance sensor 315, a battery 316, and a control device 317.

The distance measurement device 311 generates a distance map that maps the distance to the subject within the field of view. Examples of the distance measurement device 311 include a stereo camera, a ToF camera, and LiDAR. The distance measurement device 311 is provided so that a line of sight thereof faces below the fuselage 31.

The multispectral camera 312 measures the intensity of reflected light across a plurality of wavelengths ranging from the visible region to the infrared region, and generates a data cube representing the captured image for each wavelength. The data cube is three-dimensional data in which two-dimensional image data represented by the X-axis and the Y-axis are arranged on the wavelength axis. The multispectral camera 312 acquires an image in the visible region used for at least photosynthesis and an image in the near infrared region not used for photosynthesis. The multispectral camera 312 is provided so that a line of sight thereof faces below the fuselage 31.

The position measurement device 313 includes an antenna that receives a position measurement signal from a GNSS, and measures the position of the high-altitude observation equipment 30 based on the position measurement signal received via the antenna. The position measurement device 313 outputs position data indicating the measured position to the control device 317. The position of the high-altitude observation equipment 30 is represented by a three-dimensional global coordinate system. In a case in which the position measurement device 313 includes a plurality of antennas, the position measurement device 313 can measure the azimuth direction in which the high-altitude observation equipment 30 faces.

The posture measurement device 314 measures a posture of the fuselage 31. Specifically, the posture measurement device 314 measures the pitch angle, roll angle, and yaw angle of the fuselage 31 based on the acceleration and angular acceleration measured by the IMU built in the posture measurement device 314. In a case in which the IMU includes a geomagnetic sensor, the posture measurement device 314 can measure the posture in the global coordinate system. Meanwhile, the posture measurement device 314 may measure the posture in the local coordinate system based on the fuselage 31, and convert this posture into the global coordinate system based on the azimuth direction in which the fuselage 31 faces, which is measured by the position measurement device 313.

The illuminance sensor 315 is provided on the upper surface of the fuselage 31 and measures the brightness around the high-altitude observation equipment 30.

The battery 316 is the power source for the motor that drives the propeller 32 and the control device 317.

The control device 317 receives the control signal from the controller C3, which remotely operates the high-altitude observation equipment 30, and drives the propeller 32 in response to the control signal. The controller C3 may be a PC or a smartphone. The control device 317 may transmit an image of the distance map captured by the distance measurement device 311 or a color image, which is a converted one of the data cube captured by the multispectral camera 312, to the controller C3. In addition, in another embodiment, the high-altitude observation equipment 30 may move in conjunction with the low-altitude observation equipment 10 while matching the plane position thereof that of the low-altitude observation equipment 10. In this case, the control device 317 may determine the movement direction based on the position data measured by the position measurement device 313 and on the position data of the low-altitude observation equipment 10, and drive the propeller 32. Additionally, the control device 317 receives a measurement instruction signal that issues the instruction for measurement of the condition of the tree below from the controller C3. That is, the operator operates the controller C3 to position the high-altitude observation equipment 30 directly above the tree to be measured and transmits the measurement instruction signal. That is, the operator controls the high-altitude observation equipment 30 so that the tree to be measured is shown in the center of the image, and transmits the measurement instruction signal.

The control device 317 transmits the measurement data acquired by the distance measurement device 311, the multispectral camera 312, the position measurement device 313, the posture measurement device 314, and the illuminance sensor 315 to the forestry management device 70 in association with the measured time.

### «Configuration of Forestry Machine 50»

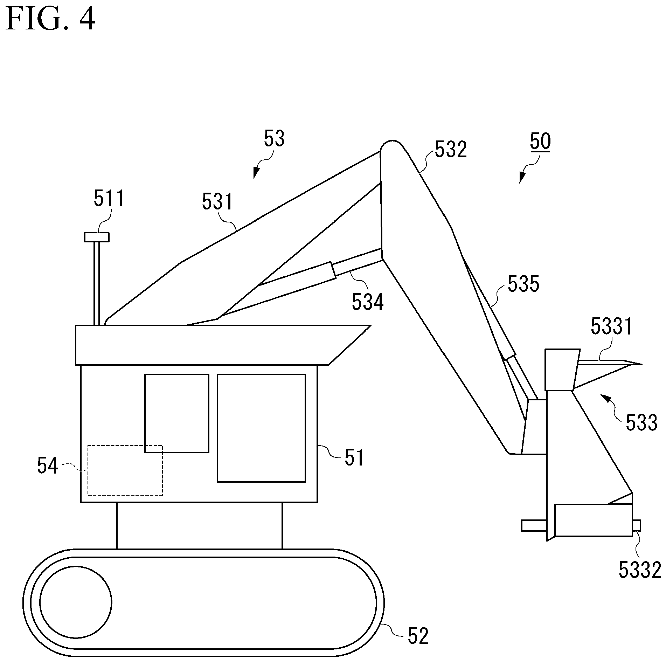

FIG. 4 is a configuration diagram showing an appearance of the forestry machine 50 according to the first embodiment. The forestry machine 50 includes a vehicle body 51, an undercarriage 52, work equipment 53, and a control device 54.

The undercarriage 52 supports the vehicle body 51 to be capable of traveling. The undercarriage 52 is a continuous track driven by a power of an engine. Meanwhile, in another embodiment, the undercarriage 52 may include a wheel driven by the power of the engine.

A position measurement device 511 for measuring a position of the vehicle body 51 is provided in the vehicle body 51. The position measurement device 511 includes an antenna that receives a position measurement signal from a GNSS, and measures the position of the vehicle body 51 based on the position measurement signal received via the antenna. The position measurement device 511 outputs position data indicating the measured position to the control device 54. The position of the vehicle body 51 is represented by a three-dimensional global coordinate system.

The work equipment 53 is used for gripping and felling the tree. The work equipment 53 is provided at a front portion of the vehicle body 51. The work equipment 53 includes a boom 531, an arm 532, a head 533, an arm cylinder 534, and a head cylinder 535.

The base end portion of the boom 531 is attached to a rear portion of the vehicle body 51. The boom 531 is rotated by a hydraulic motor (not shown). A base end portion of the arm 532 is attached to a distal end portion of the boom 531 to be rotatable about an axis extending in a width direction of the vehicle body 51. The head 533 is attached to the arm 532 to be rotatable about a first axis extending in the width direction of the vehicle body 51 and rotatable about a second axis orthogonal to the first axis. A grapple 5331 for gripping the tree is provided on an upper portion of the head 533. A circular saw 5332 for felling the tree is provided parallel with the grapple 5331 at a lower portion of the head 533.

The arm cylinder 534 and the head cylinder 535 are hydraulic cylinders. A base end portion of the arm cylinder 534 is attached to the boom 531. A distal end portion of the arm cylinder 534 is attached to the arm 532. The arm 532 is raised and lowered by the arm cylinder 534 being expanded and contracted by hydraulic oil. A base end portion of the head cylinder 535 is attached to the arm 532. A distal end portion of the head cylinder 535 is attached to the head 533. The head cylinder 535 is expanded and contracted by the hydraulic oil, whereby the head 533 rotates about the first axis.

The control device 54 generates a driving signal for driving the undercarriage 52 and the work equipment 53, and controls actuators of the undercarriage 52 and the work equipment 53. The control device 54 includes a communication device that performs communication with the forestry management device 70 via the communication network N. Based on the instruction signal received from the forestry management device 70 via the communication network N and on the position data measured by the position measurement device 511, the control device 54 controls the undercarriage 52 and the work equipment 53. The instruction signal received from the forestry management device 70 includes the traveling route within the forest F, as well as identification information of the tree to be felled and information indicating the position of the tree. The control device 54 causes the undercarriage 52 to travel along the traveling route based on the position data measured by the position measurement device 511. In addition, the control device 54 causes the undercarriage 52 to travel such that the undercarriage 52 faces the tree straight based on the position data, and drives the work equipment 53. When felling of the tree is completed, the control device 54 transmits a felling notification signal, which includes the identification information of the tree, to the forestry management device 70.

### «Configuration of Forestry Management Device 70»

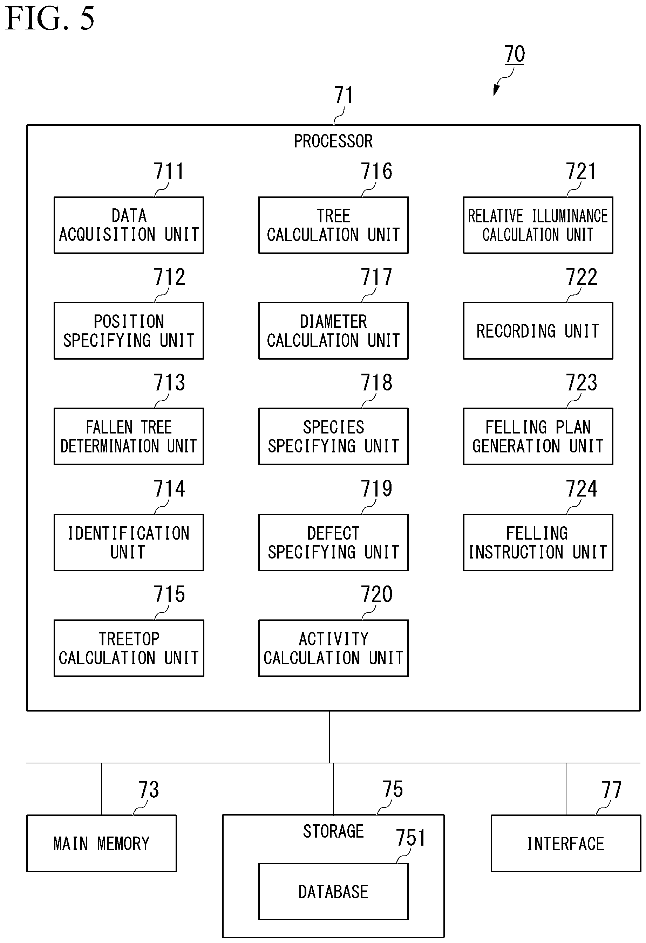

FIG. 5 is a schematic block diagram showing a configuration of the forestry management device 70 according to the first embodiment.

The forestry management device 70 is a computer including a processor 71, a main memory 73, a storage 75, and an interface 77. The storage 75 stores a program. The processor 71 reads out the program from the storage 75, loads the program in the main memory 73, and executes a process according to the program.

In another embodiment, the forestry management device 70 may include a custom large scale integrated circuit (LSI), such as a programmable logic device (PLD), in addition to the above-described configuration or instead of the above-described configuration. Exemplary examples of the PLD include a programmable array logic (PAL), a generic array logic (GAL), a complex programmable logic device (CPLD), and a field programmable gate array (FPGA). In this case, some or all of the functions realized by the processor 71 may be realized by an integrated circuit. The integrated circuit is also included in the example of the processor.

The forestry management device 70 is connected to a communication network N via the interface 77. The forestry management device 70 is connected to an input/output device (not shown) via the interface 77.

Exemplary examples of the storage 75 include a hard disk drive (HDD), a solid state drive (SSD), and a non-volatile memory. The storage 75 may be an internal medium directly connected to a bus of the forestry management device 70, or may be an external medium connected to the forestry management device 70 via the interface 77. The storage 75 is a non-transitory tangible storage medium.

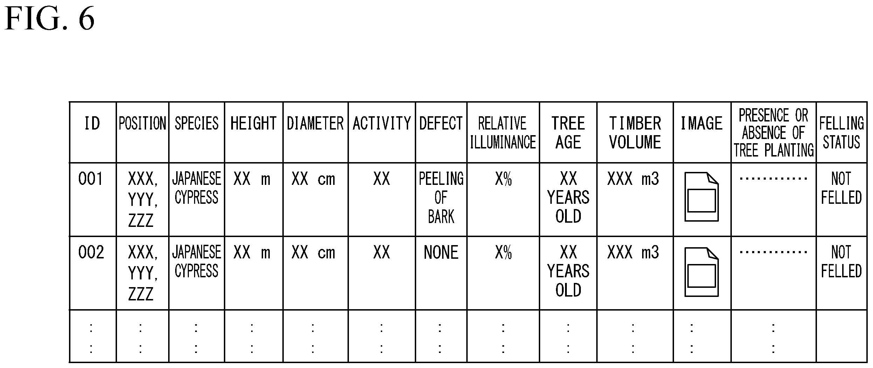

The storage 75 is configured with a database 751 that stores information related to the individuals of the trees growing in the forest F. FIG. 6 is a diagram showing a database stored in a storage according to the first embodiment. Specifically, in the database 751, for each individual of tree, the ID, position, species, height, diameter, activity, defect, surrounding relative illuminance, tree age, timber volume, image, presence or absence of tree planting, and felling status are stored in association with each other. The ID is identification information for identifying the individual of tree. The position is a three-dimensional position in the global coordinate system where the tree exists. That is, the position is the latitude, longitude, and elevation of the ground surface on which the tree stands. The height is the length from the ground surface to the treetop. The activity is an index value of the photosynthetic activity of the tree. The activity is represented by, for example, the normalized difference vegetation index (NDVI), which is the ratio of the amount of reflected light in the red wavelength region to the amount of reflected light in the near infrared region. The defect represents the presence or absence of peeling of bark, the presence or absence of rot, or the like. The relative illuminance is the ratio of the illuminance below the canopy to the illuminance above the canopy. The felling status indicates whether or not the tree has been felled. The presence or absence of tree planting may be obtained from an external database (not shown), and in this case, data related to tree planting, such as information related to the time and position of tree planting and species, may be obtained, and the tree age, position, and species in the database 751 may be updated.

The processor 71 executes a program to function as a data acquisition unit 711, a position specifying unit 712, a fallen tree determination unit 713, an identification unit 714, a treetop altitude calculation unit 715, a tree height calculation unit 716, a diameter calculation unit 717, a species specifying unit 718, a defect specifying unit 719, an activity calculation unit 720, a relative illuminance calculation unit 721, a recording unit 722, a felling plan generation unit 723, and a felling instruction unit 724.

The data acquisition unit 711 acquires measurement data from the low-altitude observation equipment 10 and from the high-altitude observation equipment 30. That is, the data acquisition unit 711 acquires the distance map (low-altitude captured data) acquired by the low-altitude observation equipment 10, as well as the time, position, posture, and illuminance at the time of capturing. The distance map of the low-altitude observation equipment 10 may be captured such that the tree is shown in the center. Hereinafter, the central point in the distance map is also referred to as the point of interest. In another embodiment, the processor 71 may analyze the distance map or the image captured by the imaging device 127 to specify a point where a tree exists as the point of interest. For example, when a target object with a shape similar to a trunk of tree, a semi-cylindrical shape, or the like is recognized in the measured distance map, the target object may be recognized as a tree. Additionally, when, in the image, the target object similar to a tree is captured in the direction of image, the target object may be recognized as a tree. In addition, the data acquisition unit 711 acquires the distance map and the data cube (high-altitude captured data) acquired by the high-altitude observation equipment 30, as well as the time, position, posture, and illuminance at the time of capturing.

The position specifying unit 712 specifies the three-dimensional position of the lower end portion of the tree from the position and posture of the low-altitude observation equipment 10, as well as the distance map acquired by the data acquisition unit 711. Specifically, the data acquisition unit 711 specifies the three-dimensional position of the lower end portion of the tree by the following procedure. The position specifying unit 712 specifies the portion where the semi-cylindrical structure is shown via pattern matching of the distance map of the low-altitude observation equipment 10. Next, the position specifying unit 712 specifies the point where the end portion of the structure in the axial direction is shown. Since the treetop is not shown in the field of view of the distance measurement device 121 of the low-altitude observation equipment 10, it is estimated that the end portion of the tree in the axial direction is the lower end portion of the tree. The position specifying unit 712 specifies the three-dimensional position of the specified point based on the position and posture of the low-altitude observation equipment 10. In a case in which the tree is a living tree, the position of the lower end portion of the tree is the position of the ground surface on which the tree stands. The altitude of the ground surface on which the tree stands is one piece of tree information of a portion lower than the trunk.

The fallen tree determination unit 713 determines whether the tree specified by the position specifying unit 712 is a fallen tree or a living tree from the distance map of the low-altitude observation equipment 10 acquired by the data acquisition unit 711. Specifically, the fallen tree determination unit 713 specifies the axial direction of the tree from the distance map, and determines that the tree is a fallen tree when the angle formed by the axial direction and the horizontal plane is less than a predetermined fallen tree determination threshold value, that is, when the axial direction of the tree is close to horizontal. On the other hand, the fallen tree determination unit 713 determines that the tree is a living tree when the angle formed by the axial direction of the tree and the horizontal plane is equal to or greater than the fallen tree determination threshold value. The fallen tree determination unit 713 may record the position at which the tree determined to be a fallen tree exists in the database 751.

The identification unit 714 acquires the ID of the tree determined to be a living tree by the fallen tree determination unit 713. Specifically, the identification unit 714 specifies the individual that is closest to the latitude and longitude of the tree specified by the position specifying unit 712 and that is not felled from the database 751. When the distance to the individual is less than a predetermined error threshold value, the identification unit 714 determines that the tree shown in the distance map is the individual, and acquires the ID of the individual. On the other hand, when the distance to the closest individual is equal to or greater than the error threshold value, the identification unit 714 determines that the tree shown in the distance map is a new individual, and assigns a new ID to the tree. In a case in which the identification unit 714 assigns a new ID to the tree, the identification unit 714 records the plane position specified by the position specifying unit 712 and the ID in association with each other in the database 751.

In addition, the treetop altitude calculation unit 715 calculates the altitude of the treetop of tree from the distance map of the high-altitude observation equipment 30 acquired by the data acquisition unit 711. Specifically, the treetop altitude calculation unit 715 calculates the altitude of the treetop of tree by the following procedure. The treetop altitude calculation unit 715 specifies the point where the treetop is shown from the distance map of the high-altitude observation equipment 30. For example, the treetop altitude calculation unit 715 may specify a point where the height in the distance map is the maximum as the point where the treetop is shown. Next, the treetop altitude calculation unit 715 calculates the three-dimensional position of the point at which the treetop is shown, based on the position and posture of the high-altitude observation equipment 30 during capturing. The identification unit 714 specifies the individual that is closest to the latitude and longitude of the point where the treetop is shown and that is not felled from the database 751. The treetop altitude calculation unit 715 specifies the calculated altitude of the three-dimensional position as the altitude of the treetop of the specified individual.

The tree height calculation unit 716 calculates, as the height of the tree, the difference between the altitude of the ground surface on which the tree stands, which is calculated by the position specifying unit 712, and the altitude of the treetop calculated by the treetop altitude calculation unit 715.

The diameter calculation unit 717 calculates the diameter of the tree from the distance map of the low-altitude observation equipment 10 acquired by the data acquisition unit 711. For example, the diameter calculation unit 717 specifies the pixels at the left and right ends of the tree in the width direction orthogonal to the axial direction of the tree in the distance map, and calculates the distance between the positions indicated by these pixels as the diameter of the tree. The diameter of the tree is one piece of tree information of the portion lower than the trunk.

The species specifying unit 718 specifies the species of the tree based on the image captured by the imaging device 127 of the low-altitude observation equipment 10. For example, the species specifying unit 718 may specify the species of the tree by inputting the image captured by the imaging device 127 of the low-altitude observation equipment 10 into a learned model that receives the image as input and that outputs the species of the tree shown in the image. Additionally, for example, the species specifying unit 718 may specify the species of the tree via template matching using a template image of the bark that is prepared in advance for each species of tree. When a color image can be obtained, for example, when the distance measurement device 121 is a stereo camera, the species specifying unit 718 may specify the species of the tree based on the image obtained by the distance measurement device 121.

The defect specifying unit 719 specifies the presence or absence of defect of trunk and the type of defect based on the image captured by the imaging device 127 of the low-altitude observation equipment 10. Examples of the type of defect include peeling of the bark or the rot. For example, the defect specifying unit 719 may specify the presence or absence of defect of the tree by inputting the image captured by the imaging device 127 of the low-altitude observation equipment 10 into a learned model that receives the image as input and that outputs the presence or absence of peeling of bark and the presence or absence of rot in the tree shown in the image. Additionally, for example, the defect specifying unit 719 may specify the defect of the tree via template matching using a template image that is prepared in advance for each defect of tree.
The information related to the defect of trunk is one piece of tree information of the portion lower than the trunk. When a color image can be obtained, for example, when the distance measurement device 121 is a stereo camera, the defect specifying unit 719 may specify the presence or absence of defect of the tree based on the image obtained by the distance measurement device 121.

The activity calculation unit 720 calculates the activity of the tree based on the data cube of the high-altitude observation equipment 30. For example, the activity calculation unit 720 specifies a pixel in the data cube where the treetop specified by the treetop altitude calculation unit 715 is shown, and calculates the ratio of the brightness in the red region to the brightness in the infrared region of that pixel as the activity of the tree.

The relative illuminance calculation unit 721 calculates the relative illuminance based on the measurement value of illuminance of the low-altitude observation equipment 10 and on the measurement value of illuminance of the high-altitude observation equipment 30. The relative illuminance calculation unit 721 extracts the value corresponding to the time closest to the time at which the low-altitude observation equipment 10 measures the illuminance from the time series of the measurement value of the illuminance of the high-altitude observation equipment 30, and calculates the relative illuminance. Since the relative illuminance varies depending on the altitude of the sun or the weather, the relative illuminance calculation unit 721 may absorb the variation by, for example, obtaining an average of a plurality of measurement values obtained at different times. The relative illuminance is one piece of tree information of the portion lower than the trunk.

The recording unit 722 records, in the database 751, the date and time, species, height, diameter, activity, defect, surrounding relative illuminance, tree age, timber volume, and image captured by the imaging device 127 of the low-altitude observation equipment 10 in association with the ID acquired by the identification unit 714. When the date on which the tree is planted is recorded as information during tree planting, the tree age can be calculated from the date and the current date and time. In addition, the tree age may be obtained from the diameter, the image analysis of the image captured by the imaging device 127, or the like. The timber volume may be calculated using a predetermined calculation formula from the height, diameter, species, and the like. The recording unit 722 may further record the three-dimensional position of the ground surface on which the tree stands in the database 751. The recording unit 722 adds data without overwriting past data in order to manage the growth history of the tree.

The felling plan generation unit 723 generates a felling plan for thinning via forestry machine 50 based on the conditions of the trees recorded in database 751. The felling plan generation unit 723 receives the input of the target range and the felling rate from the user, and determines the individuals to be felled based on the heights, activities, health conditions, and surrounding relative illuminances of the trees growing in the target range. For example, the felling plan generation unit 723 calculates a felling suitability score for each individual based on the activity, health condition, and surrounding relative illuminance, and determines the individuals to be felled in descending order of the felling suitability score.

In a case in which the activity is less than a predetermined threshold value and a possibility of witheredness is high, the felling suitability score is high. In addition, when there is a defect of the trunk, the felling suitability score is high. This is because the defect is expected to reduce the future value of the timber. The increase in the score due to rot is greater than the increase in the score due to peeling of bark. In addition, the lower the surrounding relative illuminance, the higher the felling suitability score. This is because the density of trees of tree layer is high, resulting in insufficient irradiation of the trees of sub tree layer or bush layer with sunlight. In addition, the lower the height and the smaller the diameter, the higher the felling suitability score. Meanwhile, the lower the tree age, the lower the felling suitability score. That is, even when a tree is thin and low, the tree is not a felling target when the tree age thereof is low. The determination method of a felling target is not limited to this.

In another embodiment, the felling plan generation unit 723 may receive a designation of the number of trees to be felled instead of the felling rate. Additionally, the felling plan generation unit 723 may determine trees of which the felling suitability score exceeds the threshold value as felling targets without receiving the designation of the felling rate and the number of trees to be felled.

The felling instruction unit 724 generates an instruction signal that includes the traveling route, as well as the identification information of the tree to be felled and information indicating the position of the tree, based on the felling plan generated by the felling plan generation unit 723, and transmits this instruction signal to the forestry machine 50. When the felling instruction unit 724 receives a notification of felling completion from the forestry machine 50 along with the ID of the tree, the felling instruction unit 724 rewrites the felling status of the tree associated with the ID in the database 751 to "felled."

### «Process of Forestry Management Device 70»

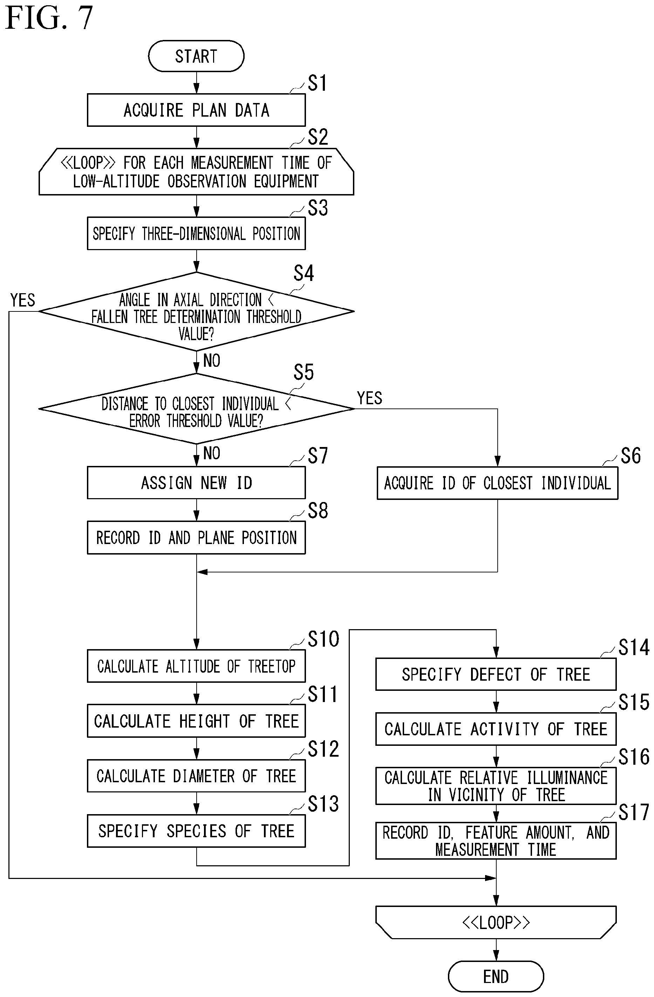

FIG. 7 is a flowchart showing an update process of tree information performed by the forestry management device 70 according to the first embodiment. The operator uses the controller C1 to control the low-altitude observation equipment 10 and the high-altitude observation equipment 30 to collect data on the trees within the target range of the forest F. The low-altitude observation equipment 10 collects data at the measurement time when the measurement instruction signal is transmitted by the operator. The high-altitude observation equipment 30 collects data at regular time intervals. In a case in which the operation via the operator is terminated, the low-altitude observation equipment 10 and the high-altitude observation equipment 30 transmit the collected data to the forestry management device 70.

The data acquisition unit 711 acquires measurement data from the low-altitude observation equipment 10 and from the high-altitude observation equipment 30 (step S1). Information indicating the measurement time is included in the measurement data. The forestry management device 70 selects one piece of measurement data collected by the low-altitude observation equipment 10 at each of the plurality of measurement times (step S2), and executes the following processes from step S3 to step S18 using the selected measurement data.

First, the position specifying unit 712 specifies the three-dimensional position of the lower end portion of the tree from the position and posture of the low-altitude observation equipment 10 which are indicated by the measurement data selected in step S2, as well as the distance map of the low-altitude observation equipment 10 (step S3). Next, the fallen tree determination unit 713 specifies the axial direction of the tree from the distance map of the low-altitude observation equipment 10 selected in step S2, and determines whether or not the angle formed by the axial direction and the horizontal plane is less than the fallen tree determination threshold value (step S4). The fallen tree determination unit 713 determines that the tree is a fallen tree when the angle formed by the axial direction of the tree and the horizontal plane is less than the fallen tree determination threshold value. In a case in which the fallen tree determination unit 713 determines that the tree is a fallen tree (step S4: YES), the forestry management device 70 skips monitoring of the condition of the tree and performs the process for the next measurement time in step S2. The fallen tree determination unit 713 may record the position at which the tree determined to be a fallen tree exists in the database 751.

In a case in which the angle formed by the axial direction of the tree and the horizontal plane is equal to or greater than the fallen tree determination threshold value (step S4: NO), the fallen tree determination unit 713 determines that the tree is a living tree. Next, the identification unit 714 specifies the individual that is closest to the latitude and longitude of the tree specified in step S3 and that is not felled from the database 751, and determines whether or not the distance to the individual is less than a predetermined error threshold value (step S5). In a case in which the distance to the closest individual is less than the error threshold value (step S5: YES), the identification unit 714 determines that the tree shown in the distance map is the individual, and acquires the ID of the individual (step S6). On the other hand, in a case in which the distance to the closest individual is equal to or greater than the error threshold value (step S5: NO), the identification unit 714 determines that the tree shown in the distance map is a new individual, assigns a new ID to the tree (step S7), and records the three-dimensional position specified in step S3 and the ID in association with each other in the database 751 (step S8).

In a case in which the identification unit 714 acquires the ID of the individual in step S6 or in step S7, the treetop altitude calculation unit 715 specifies the altitude of the treetop of the individual specified in step S6 or in step S7 from the distance map of the high-altitude observation equipment 30 acquired in step S1 (step S10).

The tree height calculation unit 716 calculates, as the height of the tree, the difference between the altitude of the ground surface calculated in step S3 and the altitude of the treetop calculated in step S10 (step S11). The diameter calculation unit 717 calculates the diameter of the tree from the distance image of the low-altitude observation equipment 10 (step S12). The species specifying unit 718 specifies the species of the tree based on the image captured by the imaging device 127 (step S13). The defect specifying unit 719 specifies the presence or absence of defect of trunk and the type of defect based on the image captured by the imaging device 127 (step S14). The activity calculation unit 720 specifies, from the data cube of the high-altitude observation equipment 30 where the plane position specified by the position specifying unit 712 is shown, a pixel corresponding to the plane position, and calculates the ratio of the brightness in the red region to the brightness in the infrared region of that pixel as the activity of the tree (step S15). The relative illuminance calculation unit 721 extracts the value corresponding to the time closest to the time at which the low-altitude observation equipment 10 measures the illuminance from the time series of the measurement value of the illuminance of the high-altitude observation equipment 30, and calculates the relative illuminance using the illuminance of the low-altitude observation equipment 10 and the illuminance of the high-altitude observation equipment 30 (step S16).

The recording unit 722 records the obtained tree information, that is, the species specified in step S13, the height calculated in step S11, the diameter calculated in step S12, the activity calculated in step S15, the presence or absence of defect specified in step S14, and the surrounding relative illuminance calculated in step S16, in the database 751 in association with the ID acquired in step S6 or in step S7 and the measurement time (step S17).

By executing the above procedure for each measurement time of the low-altitude observation equipment 10, the information related to the individual of tree in the database 751 can be updated to the latest information. The collection of tree information may be conducted at a time unrelated to thinning.

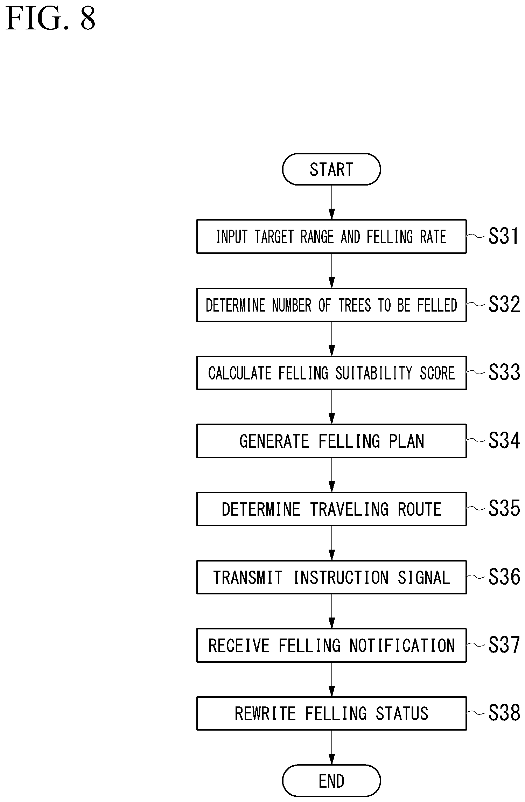

FIG. 8 is a flowchart showing a generation process of a felling plan performed by the forestry management device 70 according to the first embodiment. The operator accesses to the forestry management device 70 at the execution time of thinning and inputs the target range of thinning and the felling rate. The felling rate may be automatically determined from an average value of the relative illuminances recorded in the database 751, instead of being input by the operator.

The felling plan generation unit 723 receives the input of the target range and the felling rate from the user (step S31). The felling plan generation unit 723 determines the number of trees to be felled based on the number of trees that are not felled within the target range, which is recorded in the database 751, and on the input felling rate (step S32). The felling plan generation unit 723 calculates the felling suitability score for each individual that is not felled within the target range, which is recorded in the database 751, based on the latest condition of the individual (step S33). The felling plan generation unit 723 generates the felling plan by determining the individuals of trees to be felled of which the number is determined in step S32 as felling targets in a descending order of felling suitability score (step S34).

The felling instruction unit 724 determines the traveling route of the forestry machine 50 based on the felling plan generated by the felling plan generation unit 723 (step S35). The felling instruction unit 724, for example, searches for the shortest route that passes through all the individuals determined as felling targets. The felling instruction unit 724 generates an instruction signal that includes the determined traveling route, as well as the ID and position of the tree to be felled, and transmits this instruction signal to the forestry machine 50 (step S36). As a result, the forestry machine 50 autonomously travels along the traveling route and fells the trees to be felled. When the tree is felled, the control device 54 of the forestry machine 50 transmits a felling notification, which includes the ID of the felled individual, to the forestry management device 70. In a case in which the felling instruction unit 724 receives the felling notification from the forestry machine 50 (step S37), the felling instruction unit 724 rewrites the felling status of the tree associated with the ID in the database 751 to "felled" (step S38).

As a result, the forestry management device 70 can cause the forestry machine 50 to execute felling based on the information on the trees collected by the low-altitude observation equipment 10 and by the high-altitude observation equipment 30, and can record the felling results in the database 751.

### «Action and Effect»

As described above, with the forestry management system 1 according to the first embodiment, the position of the tree is specified based on the image captured by the low-altitude observation equipment 10 that moves through the forest at an altitude lower than the canopy and on the position at the time of capturing, and the individual of tree is identified based on this position. As a result, the forestry management system 1 can measure and manage all the trees in the forest, including those with treetops lower than the canopy, which cannot be measured by the high-altitude observation equipment 30. Additionally, the forestry management system 1 records the tree information of the portion of each individual lower than the crown in the database 751 in association with the ID of the individual, based on the images captured by the low-altitude observation equipment 10. As a result, the forestry management system 1 can collect the tree information of the portion lower than the crown, which is not shown in the image captured from the sky.

In addition, the forestry management system 1 according to the first embodiment can calculate the altitude of the ground surface on which the tree stands, which cannot be measured from the image captured from the sky, based on the image captured by the low-altitude observation equipment 10. Based on the altitude of the ground surface and on the altitude of the treetop obtained from the image captured by the high-altitude observation equipment 30, the forestry management system 1 can accurately obtain the height of the tree. In another embodiment, the forestry management system 1 is not limited to this, and may record the altitude of ground surface and the altitude of treetop in the database 751 and need not calculate the height of the tree. In addition, the forestry management system 1 according to another embodiment need not record the information related to the height of the tree in the database 751. That is, the forestry management system 1 according to another embodiment may record the data measured by only the low-altitude observation equipment 10 in the database 751.

In addition, the forestry management system 1 according to the first embodiment calculates the relative illuminance based on the illuminance measured by the low-altitude observation equipment 10 and on the illuminance measured by the high-altitude observation equipment 30, and records the relative illuminance in the database 751 in association with the individual of tree. The relative illuminance affects the growth of the bush layer and forest floor in the forest. Therefore, the forestry management system 1 can manage the forest F as appropriate by recording such information in the database 751. The forestry management system 1 according to the first embodiment obtains the relative illuminance, but the present disclosure is not limited to this. In another embodiment, the forestry management system 1 may record the illuminance at an altitude lower than the canopy, that is, the illuminance measured by the low-altitude observation equipment 10, in the database 751. In this case, the high-altitude observation equipment 30 need not include the illuminance sensor 315.

### <Second Embodiment>

The low-altitude observation equipment 10 and the high-altitude observation equipment 30 according to the first embodiment are remotely operated by the operator. On the other hand, the low-altitude observation equipment 10 and the high-altitude observation equipment 30 according to the second embodiment are autonomously driven in accordance with instructions from the forestry management device 70.

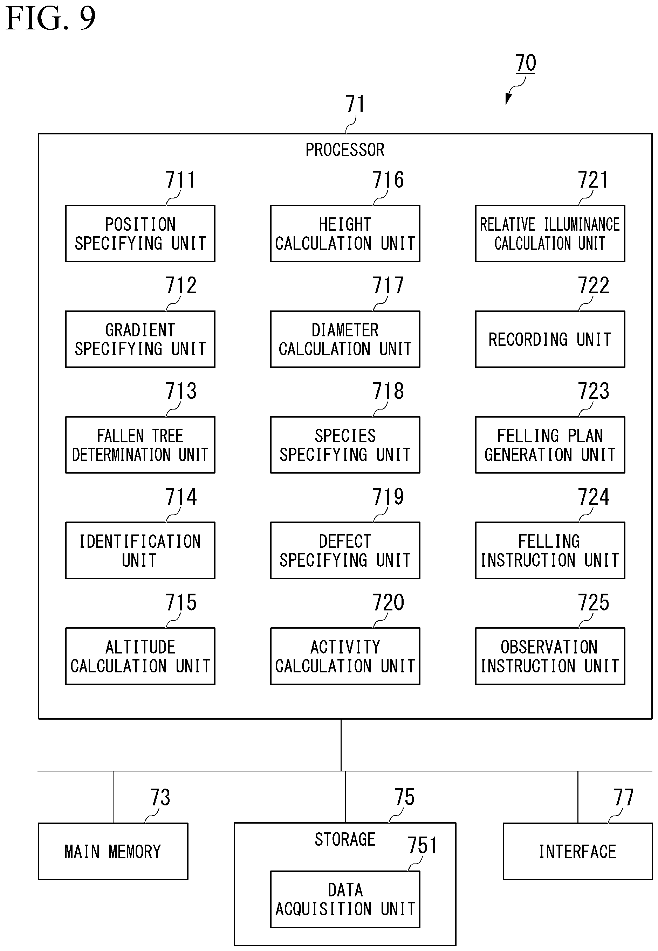

FIG. 9 is a schematic block diagram showing a configuration of the forestry management device 70 according to a second embodiment.

The forestry management device 70 according to the second embodiment further includes a measurement instruction unit 725 in addition to the configuration of the first embodiment.

The measurement instruction unit 725 generates an observation instruction signal that issues the instruction for observation of the trees existing in the target range of the forest F, and transmits the observation instruction signal to the low-altitude observation equipment 10 and to the high-altitude observation equipment 30. The observation instruction signal includes information indicating the moving route. The measurement instruction unit 725 generates the moving route, for example, such that the trajectory of the measurement range of the distance measurement device 121 in accordance with the movement of the low-altitude observation equipment 10 covers the target range. In a case in which the route along which the forestry machine 50 is to travel is determined in advance, the measurement instruction unit 725 may transmit an observation instruction signal that sets the route along which the forestry machine 50 is to travel as the moving route. In addition, in a case in which the control device 126 of the low-altitude observation equipment 10 autonomously determines whether or not the target range is covered by the travel, the measurement instruction unit 725 may transmit the observation instruction signal including information indicating the target range instead of the moving route.

The control device 126 of the low-altitude observation equipment 10 causes the low-altitude observation equipment 10 to travel along the moving route indicated by the received observation instruction signal. For example, the control device 126 may generate an environment map using a simultaneous localization and mapping (SLAM) process based on the distance map captured by the distance measurement device 121 and on the position data measured by the position measurement device 122, and may control the undercarriage 11 while modifying the moving route. During movement based on the observation instruction signal, the control device 126 determines whether or not a tree is shown in the distance map, and collects measurement data when the control device 126 determines that the tree is shown in the distance map. For example, the control device 126 can determine whether or not the tree is shown by using three-dimensional pattern matching, a learned object detection model, or the like.

The control device 317 of the high-altitude observation equipment 30 causes the high-altitude observation equipment 30 to fly at a predetermined altitude higher than the canopy along the moving route indicated by the received observation instruction signal. The control device 317 may move the high-altitude observation equipment 30 in synchronization with the low-altitude observation equipment 10, or may move the high-altitude observation equipment 30 independently of the low-altitude observation equipment 10.

The control device 126 of the low-altitude observation equipment 10 and the control device 317 of the high-altitude observation equipment 30 may control the movement based on the instruction signal received from the operator when an interrupt operation is performed by the operator during autonomous driving. After that, when the instruction signal from the operator ceases, the control device 126 of the low-altitude observation equipment 10 and the control device 317 of the high-altitude observation equipment 30 switch to autonomous driving along the moving route.

When the movement along the moving route is completed, the control device 126 of the low-altitude observation equipment 10 and the control device 317 of the high-altitude observation equipment 30 transmit the collected measurement data to the forestry management device 70.

As a result, the forestry management device 70 can record the tree information of the trees standing in the vicinity of the moving route in the database 751.

### <Another Embodiment>

Although the embodiments have been described in detail with reference to the drawings, a specific configuration is not limited to the above-described configuration, and various design changes and the like can be made. That is, in another embodiment, an order of the above-described processes may be changed as appropriate. In addition, some processes may be executed in parallel.

In the forestry management system 1 according to the above-described embodiment, the low-altitude observation equipment 10 and the high-altitude observation equipment 30 transmit the measurement data to the forestry management device 70 without processing the measurement data, and the forestry management device 70 calculates the tree information such as the species of tree, altitude of the ground surface, diameter, activity, and defect from the measurement data, but the present disclosure is not limited to this. For example, the forestry management system 1 according to another embodiment may be configured such that the control device 126 of the low-altitude observation equipment 10 or the control device 317 of the high-altitude observation equipment 30 calculates the tree information based on the measurement data, and the forestry management device 70 receives the calculated tree information. That is, the forestry management device 70 may be configured by a single computer, or may be configured by dividing the configuration of the forestry management device 70 and disposing the divided configurations in a plurality of computers, and the plurality of computers may function as the forestry management device 70 by cooperating with each other. In this case, some of the computers constituting the forestry management device 70 may be mounted inside the low-altitude observation equipment 10 or the high-altitude observation equipment 30, and the other computers may be provided outside.

The forestry management system 1 according to the above-described embodiment generates the felling plan based on the information recorded in the database 751 and transmits the instruction to the forestry machine 50 which is autonomously driven, but the present disclosure is not limited to this. For example, the forestry management system 1 according to another embodiment may only manage the individual of tree without generating the felling plan. In addition, for example, in another embodiment, the forestry machine 50 may be operated directly by the operator or may be operated remotely without being autonomously driven. In this case, the forestry management device 70 outputs an instruction signal to instruct the operator to perform felling in accordance with the felling plan. This instruction signal may be a signal for displaying the felling plan on the monitor in the cab of the forestry machine 50, or may be a signal for displaying the felling plan on the portable terminal possessed by the operator.

The forestry management system 1 according to the above-described embodiment obtains the altitude of the ground surface on which the tree stands based on the measurement data from the low-altitude observation equipment 10, and calculates the height of the tree based on this altitude, but the present disclosure is not limited to this. For example, the altitude of the ground surface may be read out from three-dimensional map data stored in the external database. In addition, the forestry management system 1 according to the above-described embodiment obtains the illuminance of sky via the illuminance sensor 315 provided in the high-altitude observation equipment 30, and calculates the relative illuminance based on this illuminance, but the present disclosure is not limited to this. For example, the illuminance of sky may be read out from weather data or the like stored in the external database.

The forestry management system 1 according to the above-described embodiment includes the distance measurement device 121 that enables the low-altitude observation equipment 10 to acquire the distance map, in order to obtain condition quantities related to the size, such as the height and diameter, as the condition quantities of tree. On the other hand, in another embodiment, when only condition quantities unrelated to size, such as the species of tree or the presence or absence of defect, are calculated, the forestry management system 1 need not include the distance measurement device 121 for generating the distance map. In this case, the low-altitude observation equipment 10 may measure the distance to the tree by including a laser range finder or the like separately from the imaging device 127.

### (Supplementary Note 1)

A forestry management system including: a data acquisition unit configured to acquire a low-altitude distance map generated by a distance measurement device that generates a distance map and a position of the low-altitude observation equipment from the low-altitude observation equipment, the low-altitude observation equipment moving in a region of a forest near a ground surface where there are no branches and including the distance measurement device and a position measurement device that measures the position of the low-altitude observation equipment; a position specifying unit configured to specify a position of a tree, based on a distance from the low-altitude observation equipment to the tree specified based on the low-altitude distance map, and on the position of the low-altitude observation equipment; an identification unit configured to acquire identification information for identifying an individual of the tree based on the position of the tree; and a recording unit configured to record low-altitude tree information, which is tree information of a portion of the individual lower than branches that is measured based on the low-altitude distance map, in a database in association with the identification information.

### (Supplementary Note 2)

The forestry management system according to Supplementary Note 1, further including: an altitude calculation unit configured to calculate an altitude of a ground surface on which the tree stands, which is the low-altitude tree information, based on the low-altitude distance map and on a three-dimensional position of the low-altitude observation equipment in a global coordinate system.

### (Supplementary Note 3)

The forestry management system according to Supplementary Note 1 or 2, in which the recording unit records high-altitude tree information, which is tree information of the individual measured from a portion of high-altitude captured data captured from a sky of the forest at which the individual is shown, in the database in association with the identification information of the individual.

### (Supplementary Note 4)

The forestry management system according to any one of Supplementary Notes 1 to 3, further including: a height calculation unit configured to calculate a height of the individual based on an altitude of a treetop of the individual measured from a portion of a high-altitude distance map measured from an altitude higher than a canopy of the forest at which the individual is shown and on an altitude of a ground surface on which the individual stands, in which the recording unit records the height of the individual in the database in association with the identification information of the individual.

### (Supplementary Note 5)

The forestry management system according to Supplementary Note 4, in which the height calculation unit specifies an altitude of a treetop of which a plane position is closest to a plane position of the individual related to the identification information, among a plurality of treetops specified from a high-altitude distance map measured from a sky of the forest, as the altitude of the treetop of the individual.

### (Supplementary Note 6)

The forestry management system according to any one of Supplementary Notes 1 to 5, in which the low-altitude observation equipment includes an illuminance sensor, the data acquisition unit acquires illuminance data measured by the illuminance sensor, and the recording unit records a value related to the illuminance data in the database in association with the identification information of the tree.

### (Supplementary Note 7)

The forestry management system according to any one of Supplementary Notes 1 to 6, in which the database stores the identification information for identifying the individual of the tree, a position of the individual, and the low-altitude tree information of the individual in association with each other, and the identification unit provides new identification information to the individual in a case in which identification information corresponding to the specified position is not recorded in the database.

### (Supplementary Note 8)

The forestry management system according to any one of Supplementary Notes 1 to 7, in which the low-altitude observation equipment moves through the forest along a traveling route along which a forestry machine that fells the tree travels, and the recording unit records low-altitude tree information of a tree standing in a vicinity of the traveling route in the database.

### (Supplementary Note 9)

The forestry management system according to any one of Supplementary Notes 1 to 8, further including: a felling plan generation unit configured to generate a felling plan indicating an individual to be felled by a forestry machine that fells the tree, based on information recorded in the database; and a felling instruction unit configured to transmit an instruction signal that instructs the forestry machine to perform felling according to the generated felling plan.

### (Supplementary Note 10)

The forestry management system according to any one of Supplementary Notes 1 to 9, further including: a fallen tree determination unit configured to determine whether the tree shown in the low-altitude captured data is a fallen tree or a living tree based on an angle of the tree with respect to horizontal, in which the identification unit acquires the identification information of the tree in a case in which the tree is determined to be the living tree.

### [Industrial Applicability]

According to the above aspect, a forestry management system can manage conditions of trees forming a forest.

### [Reference Signs List]

1: Forestry management system
10: Low-altitude observation equipment
11: Undercarriage
12: Fuselage
121: Distance measurement device
122: Position measurement device
123: Posture measurement device
124: Illuminance sensor
125: Battery
126: Control device
127: Imaging device
30: High-altitude observation equipment
31: Fuselage
311: Distance measurement device
312: Multispectral camera
313: Position measurement device
314: Posture measurement device
315: Illuminance sensor
316: Battery
317: Control device
32: Propeller
50: Forestry machine
51: Vehicle body
511: Position measurement device
52: Undercarriage
53: Work equipment
531: Boom
532: Arm
533: Head
5331: Grapple
5332: Circular saw
534: Arm cylinder
535: Head cylinder
54: Control device
70: Forestry management device
71: Processor
751: Database
711: Data acquisition unit
712: Position specifying unit
713: Fallen tree determination unit
714: Identification unit
715: Treetop altitude calculation unit
716: Tree height calculation unit
717: Diameter calculation unit
718: Species specifying unit
719: Defect specifying unit
720: Activity calculation unit
721: Relative illuminance calculation unit
722: Recording unit
723: Felling plan generation unit
724: Felling instruction unit
725: Measurement instruction unit
73: Main memory
75: Storage
77: Interface
F: Forest
N: Communication network

## Claims

1. A forestry management system comprising:
a data acquisition unit configured to acquire a low-altitude distance map generated by a distance measurement device that generates a distance map and a position of low-altitude observation equipment from the low-altitude observation equipment, the low-altitude observation equipment moving in a region of a forest near a ground surface where there are no branches and including the distance measurement device and a position measurement device that measures the position of the low-altitude observation equipment;
a position specifying unit configured to specify a position of a tree, based on a distance from the low-altitude observation equipment to the tree specified based on the low-altitude distance map, and on the position of the low-altitude observation equipment;
an identification unit configured to acquire identification information for identifying an individual of the tree based on the position of the tree; and
a recording unit configured to record low-altitude tree information, which is tree information of a portion of the individual lower than branches that is measured based on the low-altitude distance map, in a database in association with the identification information.

2. The forestry management system according to Claim 1, further comprising:
an altitude calculation unit configured to calculate an altitude of a ground surface on which the tree stands, which is the low-altitude tree information, based on the low-altitude distance map and on a three-dimensional position of the low-altitude observation equipment in a global coordinate system.

3. The forestry management system according to Claim 1 or 2,
wherein the recording unit records high-altitude tree information, which is tree information of the individual measured from a portion of high-altitude captured data captured from a sky of the forest at which the individual is shown, in the database in association with the identification information of the individual.

4. The forestry management system according to Claim 1 or 2, further comprising:
a height calculation unit configured to calculate a height of the individual based on an altitude of a treetop of the individual measured from a portion of a high-altitude distance map measured from an altitude higher than a canopy of the forest at which the individual is shown and on an altitude of a ground surface on which the individual stands,
wherein the recording unit records the height of the individual in the database in association with the identification information of the individual.

5. The forestry management system according to Claim 4,
wherein the height calculation unit specifies an altitude of a treetop of which a plane position is closest to a plane position of the individual related to the identification information, among a plurality of treetops specified from a high-altitude distance map measured from a sky of the forest, as the altitude of the treetop of the individual.

6. The forestry management system according to Claim 1 or 2,
wherein the low-altitude observation equipment includes an illuminance sensor,
the data acquisition unit acquires illuminance data measured by the illuminance sensor, and
the recording unit records a value related to the illuminance data in the database in association with the identification information of the tree.

7. The forestry management system according to Claim 1 or 2,
wherein the database stores the identification information for identifying the individual of the tree, a position of the individual, and the low-altitude tree information of the individual in association with each other, and
the identification unit provides new identification information to the individual in a case in which identification information corresponding to the specified position is not recorded in the database.

8. The forestry management system according to Claim 1 or 2,
wherein the low-altitude observation equipment moves through the forest along a traveling route along which a forestry machine that fells the tree travels, and
the recording unit records low-altitude tree information of a tree standing in a vicinity of the traveling route in the database.

9. The forestry management system according to Claim 1 or 2, further comprising:
a felling plan generation unit configured to generate a felling plan indicating an individual to be felled by a forestry machine that fells the tree, based on information recorded in the database; and
a felling instruction unit configured to transmit an instruction signal that instructs the forestry machine to perform felling according to the generated felling plan.

10. The forestry management system according to Claim 1 or 2, further comprising:
a fallen tree determination unit configured to determine whether the tree shown in low-altitude captured data captured by the low-altitude observation equipment is a fallen tree or a living tree based on an angle of the tree with respect to horizontal,
wherein the identification unit acquires the identification information of the tree in a case in which the tree is determined to be the living tree.

11. A forestry management method comprising:
a step of acquiring a low-altitude distance map generated by a distance measurement device that generates a distance map and a position of low-altitude observation equipment from the low-altitude observation equipment, the low-altitude observation equipment moving in a region of a forest near a ground surface where there are no branches and including the distance measurement device and a position measurement device that measures the position of the low-altitude observation equipment;
a step of specifying a position of a tree, based on a distance from the low-altitude observation equipment to the tree specified based on the low-altitude distance map, and on the position of the low-altitude observation equipment;
a step of acquiring identification information for identifying an individual of the tree based on the position of the tree; and
a step of recording low-altitude tree information, which is tree information of a portion of the individual lower than branches that is measured based on the low-altitude distance map, in a database in association with the identification information.
